# EUROPÄISCHE PATENTSCHRIFT

(11) **EP 0 327 679 B1**
(45) Veröffentlichungstag und Bekanntmachung des Hinweises auf die Patenterteilung: **12.01.1994**
(21) Anmeldenummer: 88117721.6
(22) Anmeldetag: 25.10.1988
(51) Int. Cl.: H04N 5/445

(54) **Anordnung zur Einblendung von Daten in ein zeitfehlerbehaftetes Videosignal**
Device for superimposing data on a video signal containing time errors
Dispositif de superposition de données sur un signal vidéo entaché d'erreurs de temps

(30) Priorität: 11.02.1988 DE 3804197
(43) Veröffentlichungstag der Anmeldung: 16.08.1989
(73) Patentinhaber: GRUNDIG E.M.V. Elektro-Mechanische Versuchsanstalt Max Grundig & Co. KG., D-90762 Fürth (DE)
(72) Erfinder: Hilpert, Werner GRUNDIG E.M.V. Max Grundig, D-8510 Fürth/Bay (DE)

(56) Entgegenhaltungen:
- EP-A- 0 063 646
- EP-A- 0 191 149
- DE-A- 3 345 143
- US-A- 4 677 484

## Beschreibung

Die Erfindung betrifft eine Anordnung zur Einblendung von Daten in ein zeitfehlerbehaftetes Videosignal mit den im Oberbegriff des Anspruchs 1 angegebenen Merkmalen. Eine derartige Anordunng wird beispielsweise in US-A-4 677 484 beschrieben.

Neuere Videorecorder weisen einen sog. "DOS"-Baustein (Display-on-Screen) auf. Mit Hilfe dieses DOS-Bausteins können auf dem Bildschirm eines an den Videorecorder angeschlossenen Fernsehempfängers Daten in das vom Videorecorder wiedergegebene Bild eingeblendet werden.

Ein solcher DOS-Baustein ist Bestandteil des Videorecorders VS 540 VPS der Anmelderin. Diesem Baustein wird beispielsweise ein zeitfehlerbehaftetes FBAS-Signal zugeführt, welches aus einem vom Magnetband wiedergegebenen Videosignal abgeleitet ist. Aus diesem zeitfehlerbehafteten FBAS-Signal werden die Synchronimpulse abgetrennt und einem Textgenerator zugeführt. Dieser Textgenerator weist einen spannungsgesteuerten Oszillator (VCO) auf, welcher Bestandteil einer PLL-Schleife ist. Mittels dieser PLL-Schleife werden die im VCO erzeugten Taktsignale mit dem zeitfehlerbehafteten Synchronimpulsen phasenstarr verkoppelt, um die im Textgenerator gebildeten RGB-Datensignale (bei denen es sich um Videotextsignale handeln kann) auf dem Bildschirm exakt mit dem Videosignal synchronisieren zu können.

Ist der Zeitfehler, dem das zeitfehlerbehaftete FBAS-Signal unterliegt, klein, dann kann mittels dieser Schaltung eine zufriedenstellende gemeinsame Darstellung von Videosignal und einzublendendem decodierten Datensignal erreicht werden, da die Horizontalsynchronisierschaltung des Fernsehempfängers in der Lage ist, die Zeitfehler der Synchronimpulse zu verarbeiten. Liegt jedoch ein größerer Zeitfehler vor, dann kann der VCO des Textgenerators nicht mehr ohne weiteres mit den zeitfehlerbehafteten Synchronimpulsen phasenstarr verkoppelt werden. Dies führt zu einem horizontalen Zittern in dem auf dem Bildschirm dargestellten Signal. Dieses horizontale Zittern kann für das eingeblendete Datensignal jedoch nicht in Kauf genommen werden, da beispielsweise die Buchstaben oder Ziffern des eingeblendeten Datensignals unlesbar werden.

Ausgehend von diesem Stand der Technik liegt der Erfindung die Aufgabe zugrunde, eine Anordnung der im Oberbegriff des Anspruchs 1 angegebenen Art derart weiterzubilden, daß das eingeblendete Datensignal auch bei größeren Zeitfehlern des zeitfehlerbehafteten Videosignals zitterfrei dargestellt werden kann.

Diese Aufgabe wird bei einer Anordnung gemäß dem Oberbegriff des Anspruchs 1 durch die im kennzeichnenden Teil des Anspruchs 1 angegebenen Merkmale gelöst.

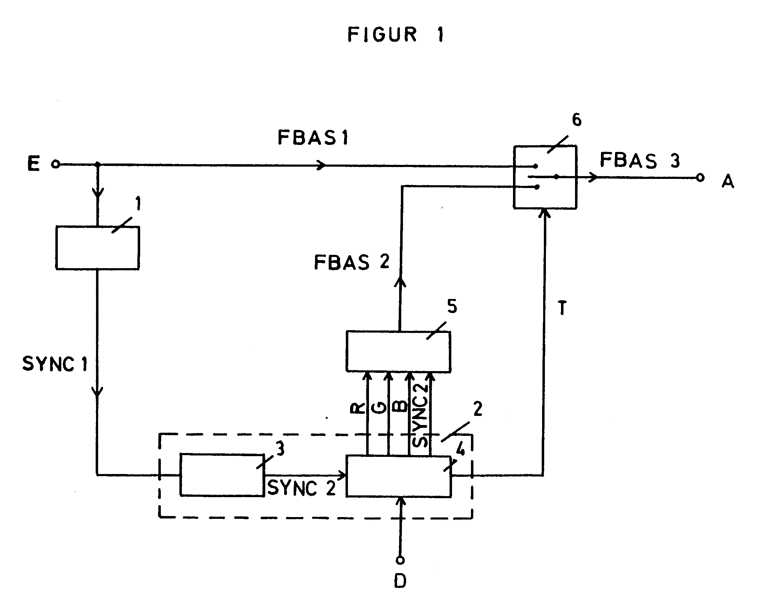

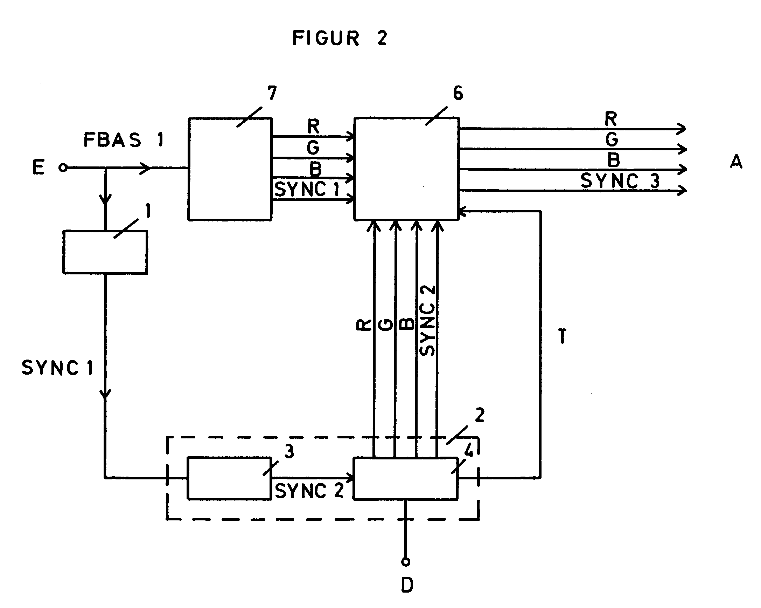

Vorteilhafte Ausgestaltungen der Erfindung ergeben sich aus den Unteransprüchen. Die Vorteile der Erfindung ergeben sich aus der Erläuterung von zwei Ausführungsbeispielen, welche im folgenden anhand der Figuren 1 und 2 durchgeführt wird.

Es zeigen
- die Figur 1 ein erstes Ausführungsbeispiel und
- die Figur 2 ein zweites Ausführungsbeispiel
für die Erfindung.

Am Eingang (E) der in Figur 1 gezeigten Anordnung liegt ein zeitfehlerbehaftetes FBAS-Signal FBAS 1 an. Dieses stammt von einem im Suchlaufbetrieb betriebenen Videorecorder. Aus diesem Signal werden in einer Synchronsignalabtrennschaltung (1) die zeitfehlerbehafteten Synchronsignale (SYNC 1) abgetrennt. Diese werden einem Synchronsignalgenerator (3) zugeführt, welcher Bestandteil eines Textgenerators (2) ist. Dieser Synchronsignalgenerator (3) erzeugt mit den zeitfehlerbehafteten Vertikalsynchronsignalen als Referenz ein normgerechtes zusammengesetztes Synchronsignal SYNC 2, dessen Vertikalsynchronsignale zeitgleich mit den zeitfehlerbehafteten Vertikalsynchronsignalen auftreten, dessen Horizontalsynchronsignale jedoch zeitfehlerfrei sind. Dieses zusammengesetzte Synchronsignal SYNC 2 wird einem Zeichengenerator (4) zugeführt, welcher ferner über einen Dateneingang (D) ein Datensignal erhält.

Bei diesem Datensignal handelt es sich um ein digitales Signal, welches mit niedriger Datenrate in den Vertikalaustastlücken des Videosignals aufgezeichnet ist. Dieses Datensignal kann den Titel des Videosignals beschreiben, welcher beispielsweise bei der automatischen Aufzeichnung des Videosignals mitaufgezeichnet wurde (siehe EP-A-191 149).

Im Zeichengenerator werden unter Verwendung des zusammengesetzten Synchronsignals SYNC 2 und einer Steuerinformation, die angibt, an welcher Stelle im Bild (bzw. in welchen Zeilen) die Einblendung erfolgen soll, aus dem digitalen Datensignal RGB-Signale und ein Einblendsteuersignal (T) erzeugt. Diese RGB-Signale und das zusammengesetzte Synchronsignal SYNC 2 werden einem Farbcoder (5) zugeführt, welcher aus den genannten Signalen ein FBAS-Signal FBAS 2 bildet.

Das zeitfehlerbehaftete FBAS-Signal FBAS 1, welches dem Eingangsvideosignal entspricht, und das FBAS-Signal FBAS 2, welches dem einzublendenden Datensignal entspricht, werden einem Umschalter (6) (bzw. einer Einblendschaltung) zugeführt. Dieser Umschalter (6) wird vom Einblendsteuersignal (T) gesteuert und ist vom Bildanfang (oberer Bildrand) bis zum Beginn der Einblendung für das Signal FBAS 1, während der Einblendung für das Signal FBAS 2 und ggfs. nach der Einblendung wieder für das Signals FBAS 1 durchlässig.

Das FBAS-Ausgangssignal FBAS 3 des Schalters 6 wird dem Ausgang (A) der in Figur 1 gezeigten Schaltung zugeführt. An den Ausgang (A) ist ein (nicht gezeichneter) Fernsehempfänger angeschlossen, auf dessen Bildschirm das Videosignal und das darin eingeblendete Datensignal dargestellt werden.

Die vorbeschriebene Schaltung ermöglicht es, daß die Horizontalsynchronisierung derjenigen Zeilen, in denen das Videosignal wiedergegeben wird, in Abhängigkeit von den im Fernsehempfänger aus dem Signal FBAS 1 abgetrennten zeitfehlerbehafteten Horizontalsynchronsignalen durchgeführt wird, und in denjenigen Zeilen, in denen das eingeblendete Datensignal wiedergegeben wird, von den im Fernsehempfänger aus dem Signal FBAS 2 abgetrennten zeitfehlerfreien Horizontalsynchronsignalen übernommen wird.

Die beschriebene Synchronisierung der Horizontalablenkung während der Einblendung in Abhängigkeit von den vom Textgenerator erzeugten zeitfehlerfreien Horizontalsynchronsignalen hat zur Folge, daß die auf dem Bildschirm eingeblendeten Daten selbst dann lesbar und ohne horizontales Zittern dargestellt werden können, wenn das Signal FBAS 1 starken Zeitfehlern unterworfen ist.

Die Figur 2 zeigt ein zweites Ausführungsbeispiel für die Erfindung. Im folgenden soll nur auf die Unterschiede zu dem in Figur 1 gezeigten Ausführungsbeispiel eingegangen werden.

Das am Eingang (E) der Schaltung anliegende zeitfehlerbehaftete Signal FBAS 1 wird einem Farbdecoder (7) zugeführt, an dessen Ausgängen dem Signal FBAS 1 entsprechende RGB-Signale und ein zeitfehlerbehaftetes Synchronsignal SYNC 1 zur Verfügung stehen. Diese Signale werden einer Einblendschaltung (6) zugeführt. Der Einblendschaltung (6) werden ferner die einzublendenden RGB-Signale und das bereits im Zusammenhang mit der Figur 1 beschriebene Synchronsignal SYNC 2 zugeführt. Der Einblendvorgang wird - ebenso wie bei Figur 1 - durch ein im Zeichengenerator (4) gebildetes Einblendsteuersignal (T) gesteuert. Die Einblendung erfolgt demnach im Unterschied zum Ausführungsbeispiel gemäß Figur 1 nicht in der FBAS-, sondern in der RGB-Ebene.

Eine vorteilhafte (nicht gezeichnete) Weiterbildung der Erfindung besteht darin, außer dem Titel der Sendung auch den Bandstand des Videorecorders auf dem Bildschirm einzublenden. Die Berechnung bzw. Ermittlung des Bandstandes kann beispielsweise so erfolgen, wie es in der DE-B-26 50 665 oder der EP-B-0 063 646 der Anmelderin beschrieben ist.

Selbstverständlich ist es auch möglich, ausschließlich den Bandstand des Videorecorders oder ein beliebiges anderes Datensignal auf dem Bildschirm in das Videosignal einzublenden.

Die beschriebene Erfindung kann zum Beispiel dann vorteilhaft verwendet werden, wenn ein Videorecorderbesitzer eine Videokassette, auf der eine Vielzahl von Sendungen aufgezeichnet ist, in den Videorecorder einlegt und im Suchlaufbetrieb eine ganz bestimmte Sendung oder eine bestimmte Szene dieser Sendung anfahren will. Die Erfindung ermöglicht es in diesem Fall, den Suchlaufbetrieb durch Beobachtung des auf dem Bildschirm eingeblendeten Titels und/oder des eingeblendeten Bandstandes zu beobachten und ggfs. zu kontrollieren.

## Patentansprüche

1. Anordnung zur Einblendung von Daten in ein zeitfehlerbehaftetes Videosignal, mit
- einer Schaltung zur Abtrennung des zeitfehlerbehafteten Synchronsignals aus dem zeitfehlerbehafteten Videosignal,
- einem Textgenerator, welchem das zeitfehlerbehaftete Synchronsignal und ein Datensignal zugeführt werden, und welcher an einem Ausgang Synchronsignale, ein dem Datensignal entsprechendes RGB-Signal und ein Einblendsteuersignal zur Verfügung stellt, und
- einer vom Einblendsteuersignal gesteuerten Einblendschaltung in welcher das Datensignal und die Synchronsignale in das zeitfehlerbehaftete Videosignal eingeblendet werden,
**dadurch gekennzeichnet,** daß die im Textgenerator (2) von einem Synchronsignalgenerator (3) erzeugten Synchronsignale zeitfehlerfreie Horizontalsynchronsignale und zeitfehlerbehaftete Vertikalsynchronsignale aufweisen.

2. Anordnung nach Anspruch 1 mit einem Bildschirm zur Darstellung des zeitfehlerbehafteten Videosignals und des darin eingeblendeten Datensignals und mit einer Horizontalablenkschaltung, **dadurch gekennzeichnet,** daß während der Dauer der Einblendung die Synchronisierung der Horizontalablenkschaltung von den im Textgenerator (2) erzeugten Horizontalsynchronsignalen durchgeführt wird.

3. Anordnung nach Anspruch 1 oder 2, **dadurch gekenzeichnet,** daß das zeitfehlerbehaftete Videosignal ein von einem Videorecorder wiedergegebenes Signal ist.

4. Anordnung nach Anspruch 3, **dadurch gekennzeichnet,** daß das zeitfehlerbehaftete Videosignal im schnellen Suchlaufbetrieb auf dem Bildschirm dargestellt wird.

5. Anordnung nach Anspruch 3 oder 4, **dadurch gekennzeichnet,** daß das Datensignal ein in den Vertikalaustastlücken des Videosignals auf dem Aufzeichnungsträger des Videorecorders aufgezeichnetes Signal ist, welches zusammen mit dem Videosignal vom Aufzeichnungsträger wiedergegeben wird.

6. Anordnung nach einem oder mehreren der vorhergehenden Ansprüche, **dadurch gekennzeichnet,** daß das Datensignal den Titel des Videosignals beinhaltet.

7. Anordnung nach einem oder mehreren der Ansprüche 3 - 6, **dadurch gekennzeichnet,** daß das Datensignal eine Bandstandsinformation beinhaltet.

## Claims

1. System for inserting data in a video signal which is liable to timing errors, comprising
- a circuit for separating the synchronisation signal which is liable to timing errors from the video signal which is liable to timing errors,
- a text generator in which the synchronisation signal which is liable to timing errors and a data signal are fed and which provides synchronisation signals, a RGB signal corresponding to the data signal and an insertion control signal at an output, and,
- an insertion circuit which is controlled by the insertion control signal and in which the data signal and the synchronisation signals are inserted in the video signal which is liable to timing errors,
characterised in that the synchronisation signals generated in the text generator (2) by a synchronisation signal generator (3) comprise timing-error-free horizontal synchronisation signals and vertical synchronisation signals which are liable to timing errors.

2. System according to Claim 1 comprising a picture screen for displaying the video signal which is liable to timing errors and the data signal inserted therein and comprising a horizontal deflection circuit, characterised in that, for the duration of the insertion, the horizontal deflection circuit is synchronised by the horizontal synchronisation signals generated in the text generator (2).

3. System according to Claim 1 or 2, characterised in that the video signal which is liable to timing errors is a signal played back by a video recorder.

4. System according to Claim 3, characterised in that the video signal which is liable to timing errors is displayed in the fast search mode on the picture screen.

5. System according to Claim 3 or 4, characterised in that the data signal is a signal which is recorded in the vertical blanking intervals of the video signal on the recording medium of the video recorder and which is played back together with the video signal from the recording medium.

6. System according to one or more of the preceding claims, characterised in that the data signal contains the title of the video signal.

7. System according to one or more of Claims 3 to 6, characterised in that the data signal contains tape position information.

## Revendications

1. Dispositif pour insérer des données dans un signal vidéo affecté d'erreurs de temps, comportant :
- un circuit pour séparer le signal de synchronisation affecté d'erreurs de temps, du signal vidéo affecté d'erreurs de temps,
- un générateur de texte, auquel sont envoyés le signal de synchronisation affecté d'erreurs de temps et un signal de données et qui délivre, à sa sortie, des signaux de synchronisation, un signal RGB correspondant à un signal de données et un signal de commande d'insertion, et
- un circuit d'insertion commandé par le signal de commande d'insertion et dans lequel le signal de données et les signaux de synchronisation sont insérés dans le signal vidéo affecté d'erreurs de temps,
caractérisé en ce que les signaux de synchronisation produits dans le générateur de texte (2) par un générateur de signaux de synchronisation (3), comportent des signaux de synchronisation horizontale ne présentant aucune erreur de temps et des signaux de synchronisation verticale affectés d'erreurs de temps.

2. Dispositif selon la revendication 1, comportant un écran pour la représentation du signal vidéo affecté d'erreurs de temps et du signal de données inséré dans ce signal vidéo, et un circuit de balayage horizontal, caractérisé en ce que pendant la durée de l'insertion, la synchronisation du circuit de balayage horizontal est exécutée au moyen des signaux de synchronisation horizontale produits dans le générateur de texte (2).

3. Dispositif selon la revendication 1 ou 2, caractérisé en ce que le signal vidéo affecté d'erreurs de temps est un signal reproduit par un enregistreur vidéo.

4. Dispositif selon la revendication 3, caractérisé en ce que le signal vidéo affecté d'erreurs de temps est représenté sur l'écran lors de l'opération de recherche rapide.

5. Dispositif selon la revendication 3 ou 4, caractérisé en ce que le signal de données est un signal, qui est enregistré sur le support d'enregistrement de l'enregistreur vidéo pendant les intervalles de suppression verticale du signal vidéo et qui est reproduit conjointement avec le signal vidéo à partir du support d'enregistrement.

6. Dispositif selon une ou plusieurs revendications précédentes, caractérisé en ce que le signal de données contient le titre du signal vidéo.

7. Dispositif selon une ou plusieurs des revendications 3-6, caractérisé en ce que le signal de données contient une information d'état de bande.
